# EUROPEAN PATENT APPLICATION

(11) **EP 4 116 266 A1**
(43) Date of publication of application: **11.01.2023**
(21) Application number: 21764497.0
(22) Date of filing: 03.02.2021
(51) Int. Cl.: C02F 1/44, C02F 1/68, B01D 36/00

(54) **SYSTEM FOR PURIFYING A LIQUID**

(30) Priority: 04.03.2020 RU 2020109574
(71) Applicant: Electrophor, Inc., Woodmere, NY 11598 (US)
(72) Inventor: SHMIDT, Joseph L., New York, 11598 (US); RUSINOV, Gleb Dmitrievich, Saint-Petersburg, 198302 (RU); KNIZEL, Vadim Nikolaevich, Saint-Petersburg, 197183 (RU)
(74) Representative: Danubia Patent & Law Office LLC
(86) International application number: PCT/RU2021/000044
(87) International publication number: WO 2021/177852

(57) **Abstract**

The invention relates to liquid purification systems with purified water mineralization, which uses predominantly water from various resources.

The main problem of existing liquid purification systems, particularly membrane systems, is that during the purification process not only dangerous debris (residual oil, pesticides, herbicides, heavy metals, bacteria, viruses, mechanical particles and other) are removed, but even the minerals necessary for human (calcium, potassium, magnesium, sodium and other), so a mineralization step is needed after the purification step to normalize mineral composition. In the state of the art, there are known liquid purification systems with integral mineralization means and also devices for mineralization which can be connected to liquid purification systems. The working principle of the systems known in the state of the art is that purified liquid flows through a vessel with mineralization additive, which is partly dissolved and the liquid becomes mineralized. The main drawback of the systems known in the state of the art is that due to peculiarities of the dissolving process and/or mineralization additive content, it is impossible to control the mineralization process, so the mineralization level is minor, and the pH is higher than the permitted value.

The liquid purification system contains a raw liquid line, a liquid purification unit, a mineralization unit, a purified liquid line is characterized in that mineralization of liquid is performed by controlled dispensing of a mineralization solution obtained by selective purification of raw or drainage liquids, or a mixture thereof.

## Description

The invention relates to liquid purification systems with purified water mineralization, which uses predominantly water from various resources.

The main problem of existing liquid purification systems, particularly membrane systems, is that during purification process not only dangerous debris (residual oil, pesticides, herbicides, heavy metals, bacteria, viruses, mechanical particles and other) are removed, but even minerals necessary for human (calcium, potassium, magnesium, sodium and other), so mineralization step is needed after purification step to normalize mineral composition. In the state of the art, there are known liquid purification systems with integral mineralization means and also devices for mineralization, which can be connected to liquid purification systems. The working principle of systems known in the state of the art is that purified liquid flows through the vessel with mineralization additive, which is partly dissolved, and the liquid becomes mineralized. The main drawback of the systems known in the state of the art is that due to peculiarities of the dissolving process and/or mineralization additive content, it is impossible to control the mineralization process, so the mineralization level is minor, and the pH is higher than the permitted value.

The device for obtaining water enriched with magnesium and potassium of the application US 2011/0100890 [Kinetico Inc, IPC B01D 61/10, published 05.05.2011] is known in the state of the art. The device contains a liquid purification unit, a mineralization unit, a purified liquid storage vessel and a purified liquid supply for consumption means. All elements of the system of US 2011/0100890 are connected in series. The mineralization unit consists of mixture of potassium and calcium containing components and means for working media retention. These means are arranged in the mineralization unit in the water inlet and outlet and between the potassium and calcium containing components. The device of the application US 2011/0100890 works as follows: raw liquid flows into the inlet of the liquid purification unit, after purification liquid goes through the mineralization unit and then into the collecting vessel for the purified liquid, from where it flows to the consumer if necessary. The drawback of the invention of the application US 2011/0100890 A1 is that mineralization component particles accumulate on the surface or inside of the retention means by time, hence the resistance for liquid which flows into the collecting vessel is increased, and this leads to carrying power decrease of the mineralization unit. In addition, the mineralization process depends on the amount of potassium and calcium containing components, so the mineralization degree during the life of the system will be different.

The liquid mineralization device of US patent no. 7303666 B1 [SpectraPure Inc, IPC B01D 29/62, 29/50, 63/00, 61/00 pub. 04.12.2007] is known in the state of the art. The device of the US patent no. 7303666 consists of a raw liquid line, a liquid purification unit, a mineralizer made as body, filled with mineralization agent, a purified liquid collecting vessel, which is connected through a liquid return line to a liquid purification unit inlet, and is connected through a purified liquid supply line to a mineralizer liquid outlet. Non-return valves are installed in the liquid return line and the purified liquid supply line. System of the US patent no. 7303666 B1 works as follows. Raw liquid from the source of the raw liquid flows along the raw liquid line into the liquid purification unit, where liquid purification process takes place. Purified liquid flows through the mineralizer and then goes for consumption or liquid flows through the purified liquid supply line into the collecting vessel, which is filled with purified liquid till the pressure reaches the predetermined level, then the system stops. The drawback of the system is that there is no means to control liquid mineralization process. The mineralization level depends on liquid flow velocity, liquid temperature, ambient temperature, and other factors, which influence the solution process. In addition, mineralization process depends on the amount of mineralization component, so the mineralization level during the life of the system will be different.
Liquid purification and mineralization system of RU patent no. 2515317 [Aquaphor Corp., IPC B01D 61/10, B01D 15/00, B01D 25/00, published 10.05.2014], which is chosen as the closest analogue, is known in the state of the art. The system of RU patent no. 2515317 consists of raw a liquid line, a liquid purification unit, a liquid supply line with a valve, a mineralization unit, made as the body, filled with mineralization composition, a «back and forth» supply line, a collecting vessel and a purified liquid line. The raw liquid line is connected to the liquid purification unit inlet; a liquid purification unit outlet is connected through the supply liquid line with valve to the mineralization unit. The valve in the supply liquid line with valve is arranged so that liquid can flow from the liquid purification unit to the valve only in one direction, liquid from the valve to the liquid mineralization unit can flow in two directions. The mineralization unit from one side is connected to the liquid supply line with valve and from other side is connected to the collecting vessel through the «back and forth» supply line. The purified liquid inlet is connected to the valve of the liquid supply line with valve. The system of RU patent no. 2515317 works as follows: raw liquid flows along the raw liquid line into the liquid purification unit, where liquid purification takes place. Purified liquid along the liquid supply line with valve goes into the mineralization unit, where a first step of mineralization is done. Then the liquid flows along the "back and forth" supply line into the collecting vessel. If it is necessary, liquid flows from the collecting vessel along the "back and forth" supply line into the mineralization unit, where a second step of mineralization is done. Liquid flows from the mineralization unit along the liquid supply line with valve into the purified liquid line and then for consumption. A drawback of the indicated system is that mineralization liquid process is based on the mineralization composition dissolving. The process is uneven, uncontrolled and depends on liquid flow velocity, liquid temperature and ambient temperature. Also, liquid flows through the mineralization unit twice, such uncontrolled process is done twice, and the mineralization level can be either insufficient or excessive. And the mineralization process depends on the amount of mineralization component, so the mineralization level will change during the life of the system. But the main drawback of the system, chosen as the closest analogue, is its complexity as there are several elements through which liquid flows in two directions, it demands complex control unit of liquid flows. This fact decreases the reliability of the system.

The object of the invention and the attained technical effect is to develop new liquid purification systems with controlled and even liquid mineralization during the life of the system and to increase the reliability and simplify the construction.

A problem to be solved and the achieved technical result is that the liquid purification system containing a raw liquid line, a liquid purification unit, a mineralization unit, a purified liquid line is characterized in that, mineralization of liquid is performed by controlled dispensing of a mineralization solution, obtained by selective raw or drainage liquids or their mixture, and the mineralization unit contains a concentrate supply line, a selective treatment element, a mineralization solution supply line, a mineralization solution dispenser, and a concentrate supply line inlet is connected to a drainage liquid outlet of the liquid purification unit and/or the raw liquid line, a concentrate supply line outlet is connected to a selective treatment element inlet, the outlet of the selective treatment element is connected to the mineralization solution supply line, the outlet of which is connected to the purified liquid line through the mineralization solution dispenser; wherein the selective treatment element comprises not less than one hollow fiber membrane and not less than one sorption purification element, and may additionally contain mineralization additive; and additionally the system may contain a control panel, functionally connected to the mineralization solution dispenser and at least one sensor, which can be installed into the raw liquid line and/or purified liquid line and/or mineralization solution supply line.

Figures depicts disclosure of invention:
Figure 1 - a general scheme of the liquid purification system, wherein the concentrate supply line (6) inlet is connected to the raw liquid line (1);
Figure 2 - a general scheme of the liquid purification system, wherein the concentrate supply line (6) inlet is connected to the drainage liquid outlet of the liquid purification unit (2);
Figure 3 - a general scheme of the liquid purification system, wherein the concentrate supply line (6) inlet is connected to the drainage liquid outlet of the liquid purification unit (2) and the raw liquid line (1);

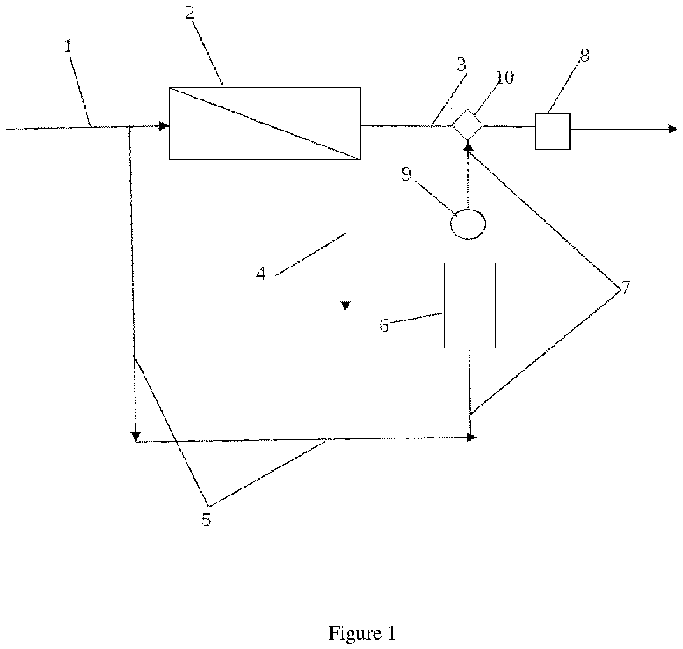

The liquid purification system (figures 1 - 3), in general, consists of a raw liquid line (1), a liquid purification unit (2), a purified liquid line (3) and a mineralization unit (4).

An inlet of the raw liquid line (1) is connected to a raw liquid source; a raw liquid line (1) outlet is connected to a liquid purification unit (2) inlet. The raw liquid line (1) may additionally contain pressure increasing means (not depicted in the figure), for example, a pump or pump system. The raw liquid line (1) may additionally contain a raw liquid vessel (not depicted in the figures). The raw liquid line (1) may additionally contain a pressure reducer (not depicted in the figures). The raw liquid line (1) may additionally contain a fluid control valve (not depicted in the figures). The raw liquid line (1) may additionally contain a sensor (not depicted in the figures), made as salt content measuring means, for example a TDS-sensor, or as liquid conduction measuring means, or as an ion selective electrode or a sensor or a combination of ion selective electrodes or sensors.

The liquid purification unit (2) through its inlet is connected to the raw liquid line (1), and its drainage liquid outlet is connected to the purified liquid line (3). In general, the liquid purification unit (2) consists of at least one liquid purification membrane element (5). The liquid purification membrane element (5) may be made as a reverse osmosis membrane or an ultrafiltration or microfiltration hollow fiber membrane. The liquid purification unit (2) may contain two or more liquid purification membrane elements (5), which may be installed either in series or in parallel. Additionally, the liquid purification unit (2) may contain mechanical pre-filters, sorption pre-filters, water conditioning cartridges, water softening cartridges (not shown in the figures). In case the liquid purification membrane element (5) is made as a reverse osmosis membrane, the liquid purification unit (2) has a drainage liquid outlet. The liquid purification unit (2) may additionally contain a flushing unit (not depicted in the figures), and in this case the liquid purification unit (2) has a drainage liquid outlet too. The liquid purification unit (2) may additionally contain a drainage liquid discharge line (10), connected to the drainage liquid outlet. Drainage liquid may partly flow into the mineralization unit (4), and is partly drawn out of the system through the drainage liquid discharge line (10). The liquid purification unit (2) may additionally contain a recirculation line (not shown in the figures). An inlet of the recirculation line is connected to the drainage liquid outlet; its outlet is connected to the raw liquid inlet of the liquid purification unit (2) or to an inlet of the liquid purification membrane element (5). Liquid purification elements and/or valve systems to regulate liquid recirculation level (not shown in the figures) may be additionally installed into the recirculation line. The liquid purification unit (2) may additionally contain at least one collecting vessel (not shown in the figures).

An inlet of the purified liquid line (3) is connected to the liquid purification unit (2) outlet, the purified liquid line (3) is intended for purified liquid consumption. The purified liquid line (3) may be additionally equipped with liquid consumption means (not shown in the figures), such as a faucet or a valve. Additionally, the purified liquid line may contain one or more collecting vessels of different type (not shown in the figures). Additionally, the purified liquid line may contain a valve (not shown in the figures), made as salt content measuring means, for example, a TDS-sensor, or as liquid conduction measuring means, or as an ion selective electrode or a sensor or a combination of ion selective electrodes or sensors.

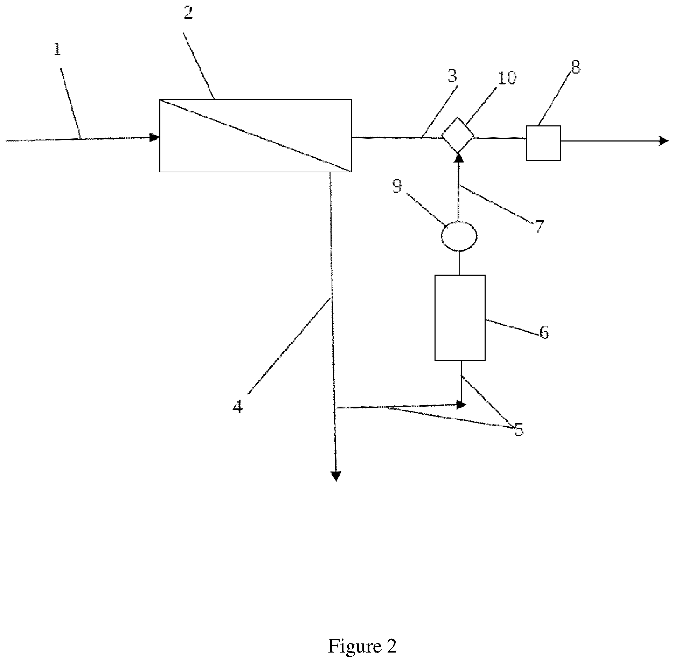

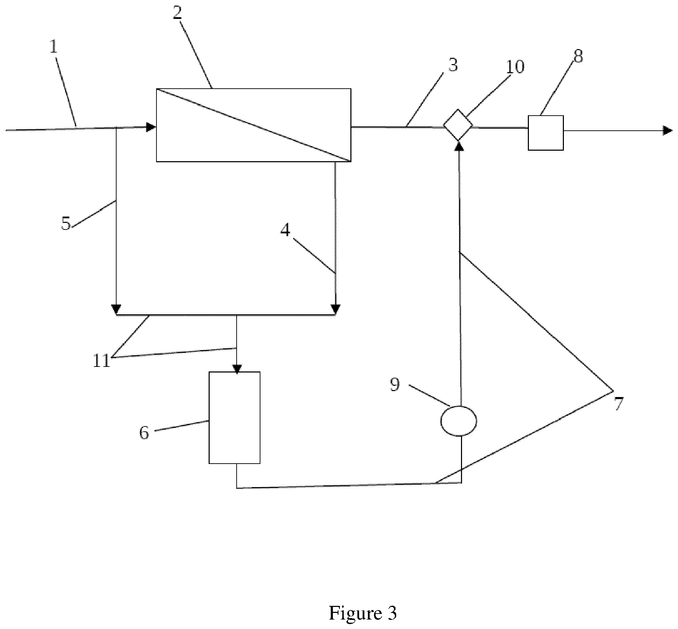

The mineralization unit (4) consists of a concentrate supply line (6), a selective treatment element (7), a mineralization solution supply line (8), a mineralization solution dispenser (9). A concentrate supply line (6) inlet is connected to the raw liquid line (1) (Figure 1). Or, the concentrate supply line (6) inlet is connected to the drainage liquid outlet of the liquid purification unit (2) (Figure 2). Or, the concentrate supply line (6) inlet is simultaneously connected to the raw liquid line (1) and the drainage liquid outlet of the liquid purification unit (2) (Figure 3). A concentrate supply line (6) outlet is connected to a selective treatment element (7) inlet, the outlet of which is connected to the mineralization solution supply line (8), the outlet of which is connected to the purified liquid line (3) through the mineralization solution dispensing means (9). Additionally, the mineralization unit (4) is connected to the collecting vessel (not shown in the figures).

The selective treatment element (7) consists of not less than one hollow fiber membrane and not less than one sorption treatment element, installed one by one. The order in the sequence along the liquid flow from inlet to the outlet of selective treatment element (7) may be different. For example, but not limited to, a sorption treatment element can be installed first and then a hollow fiber membrane, or vice versa. Or, there can be two sorption treatment elements and a hollow fiber membrane between them. Parts of the selective treatment element (7) can be made each in a separate housing or several parts in one housing. The hollow fiber membrane may be an ultra- or microfiltration membrane. The sorption treatment element may be made as, for example, but not limited to, a mixture of granulated or fibrous sorbents or as carbon block, or a carbon fiber block, or a nonwoven sorption material or a multilayer sorption material. The selective treatment element (7) may additionally contain a mineralization additive. The selective treatment element (7) extracts organic debris from the liquid (residual oil, pesticides, herbicides, trace quantities of pharmaceuticals, heavy metals, mechanical impurities, viruses and bacteria), but leaves useful minerals in the water.

The supply mineralization solution line (8) may additionally contain a sensor (not shown in the figures), made as salt content measuring means, for example a TDS-sensor, or as liquid conduction measuring means, or as an ion selective electrode or a sensor or a combination of ion selective electrodes or sensors.

The mineralization solution dispenser (9) may be made as, for example, but not limited to, a mechanical, electromechanical, electrical (servo-motor) valve or a dosing pump. The mineralization solution dispenser (9) permits to regulate the frequency and volume of dispensing mineralization solution into the purified liquid manually or in auto mode. Dispensing may be either continuous with predetermined rate, or batch in pulse mode.

The liquid purification system may additionally contain a control panel (not shown in the figures), which is functionally connected to the mineralization solution dispenser (9). So, if additional sensors are installed in the raw liquid line (1) and/or the purified liquid line (3), and/or in the mineralization solution supply line (8), they are also connected to the control panel, and it is possible to set and correct the mineralization solution dosing on the basis of sensors values.

Within distinguishing features, the claimed system works as follows. Raw liquid from its source along the raw liquid line (1) goes into the liquid purification unit (2), where purification takes place. Purified liquid flows into the purified liquid line (3). At the same time, raw liquid from the raw liquid line (1) and/or drainage liquid from the liquid purification unit (2) go(es) into the mineralization unit (4), wherein it flows into the selective treatment element (7) inlet along the concentrate supply line (6), where selective purification of the concentrate takes place and the mineralization solution is formed. The mineralization solution is dosed along the mineralization solution supply line (8) through the mineralization solution dispenser (9) under control into the purified liquid in the purified liquid line (3). Purified mineralized liquid goes to the consumption.

In the system of the closest analogue, the basis of the mineralization process is the mineralization composition dissolution. This process depends on different factors and is difficult to be controlled. In the claimed invention, the basis of the mineralization process is a fluidic dispensing principle which can easily regulated. So, opposed to the closest analogue, the system provides for controlled mineralization. The mineralization solution is formed during the liquid purification process, so the system does not require additional vessels for mineralization solution prepared beforehand, which eases its operation. In addition, opposed to the closes analogue, the system does not need elements where liquid flows "back and forth", which increases system reliability. Also opposed to the closest analogue system, working efficiency is achieved with only one mineralization solution dispenser and there is no need for a complicated valve system which also increases the reliability of the system.

The description of the present invention submits a preferred embodiment of the invention. It can be changed within the claimed set of the claims, so a wide use of the invention is possible.

## Claims

1. A liquid purification system containing a raw liquid line, a liquid purification unit, a mineralization unit, a purified liquid line, **characterized in that** a mineralization of purified liquid is performed by controlled dispensing of a mineralization solution obtained by selective purification of raw or drainage liquid, or a mixture thereof.

2. The liquid purification system according to claim 1, **characterized in that** the mineralization unit comprises a concentrate supply line, a liquid selective treatment element, a mineralization solution supply line, a mineralization solution dispenser, and a concentrate supply line inlet connected to a drainage liquid outlet of the liquid purification unit and/or the raw liquid line, a concentrate supply line outlet connected to a selective treatment element inlet, a selective treatment element outlet connected to the mineralization solution supply line, wherein an outlet of the mineralization solution supply line is connected to the purified liquid line through the mineralization solution dispenser.

3. The liquid purification system according to claim 2, **characterized in that** the liquid selective treatment element comprises not less than one hollow fiber membrane and not less than one sorption purification element.

4. The liquid purification system according to claim 2, **characterized in that** the liquid selective treatment element may additionally contain mineralization additive.

5. The liquid purification system according to claim 1, **characterized in that** it may additionally contain a control panel, functionally connected to the mineralization solution dispenser

6. The liquid purification system according to claim 1, **characterized in that** it may additionally contain at least one sensor, which can be installed into the raw liquid line and/or the purified liquid line and/or the mineralization solution supply line.
